# EUROPEAN PATENT SPECIFICATION

(11) **EP 4 421 324 B1**
(45) Date of publication and mention of the grant of the patent: **04.02.2026**
(21) Application number: 22895350.1
(22) Date of filing: 24.10.2022
(51) Int. Cl.: F04C 29/00, F04B 39/00, H02K 5/22

(54) **ELECTRIC COMPRESSOR**
ELEKTRISCHER VERDICHTER
COMPRESSEUR ÉLECTRIQUE

(30) Priority: 22.11.2021 JP 2021189466
(43) Date of publication of application: 28.08.2024
(73) Proprietor: MITSUBISHI HEAVY INDUSTRIES THERMAL SYSTEMS, LTD., Tokyo 100-8332 (JP)
(72) Inventor: ISHITOBI, Masakazu, Tokyo 100-8332 (JP); MIYAMOTO, Yoshiaki, Tokyo 100-8332 (JP); WATANABE, Takashi, Tokyo 100-8332 (JP); GOTO, Syusaku, Nagoya-shi, Aichi 460-0008 (JP)
(74) Representative: Studio Torta S.p.A.
(86) International application number: PCT/JP2022/039591
(87) International publication number: WO 2023/090066

(56) References cited:
- WO-A1-2020/250383
- JP-A- 2014 107 209
- JP-A- 2019 021 570

## Description

### Technical Field

The present disclosure relates to an electric compressor.

### Background Art

A hermetic terminal has been known as means for energizing the inside of a housing that requires airtightness, such as a compressor. Such a hermetic terminal supplies power from the outside to the inside of the housing via a connecting portion to which the external cable and the hermetic terminal are connected.

The compressor tends to be smaller and have a larger capacity, and accordingly, a current flowing through a cable or a connection terminal that supplies power from the outside is increasing. In a case where the cable is made thicker in order to deal with an increase in current, the hermetic terminal unit becomes large. In a case where the size of the hermetic terminal unit is increased, the size of the insertion hole for the hermetic terminal formed in the housing is increased, such that reinforcement for ensuring pressure resistance or the like is required.

Therefore, in order to deal with the increase in current, a method has been proposed in which a plurality of pins are provided in one hermetic terminal and a plurality of straps fixed to the plurality of pins are respectively connected to a plurality of external cables (for example, Japanese Unexamined Patent Publication No. 2019-21570).

Further known electric compressor known in the is disclosed in WO2020250383 A1.

### Summary of Invention

### Technical Problem

However, in Japanese Unexamined Patent Publication No. 2019-21570, one hermetic terminal is connected to the plurality of external cables, such that the number of external cables is greater than the number of hermetic terminals. For this reason, the number of connection points of the external cables at a connection destination increases, and the work in a case of installation becomes complicated.

The present disclosure has been made in view of such circumstances, and an object of the present disclosure is to provide an electric compressor capable of dealing with the increase in current without increasing the number of external cables.

### Solution to Problem

According to one aspect of the present disclosure, there is provided an electric compressor including: an electric motor; a compression mechanism that is driven by the electric motor to compress a refrigerant; a housing that accommodates the electric motor and the compression mechanism in a sealed space; a plurality of hermetic terminals that are respectively inserted into a plurality of through-holes formed in the housing and that are sealed not to communicate the sealed space with an outer space; and a connection mechanism that is fixed to the housing and that electrically connects the hermetic terminals to a plurality of external cables. Each hermetic terminal has an insulation part which is formed of an insulation material, a plurality of pins each of which is conductive and is inserted into the insulation part such that one end and the other end thereof protrude, and a plurality of straps each of which is fixed to each one end of the plurality of pins, the connection mechanism has a plurality of bus bars each of which is conductive and is connected to each one of the external cables, a terminal block to which the plurality of bus bars are fixed and which is installed in the housing, and a plurality of linking cables each of which is connected to each one of the plurality of straps. The plurality of linking cables are respectively connected to the plurality of bus bars.

### Advantageous Effects of Invention

According to the present disclosure, it is possible to provide an electric compressor capable of dealing with the increase in current without increasing the number of external cables.

### Brief Description of Drawings

Fig. 1 is a partial longitudinal cross-sectional view showing a compressor according to a first embodiment of the present disclosure.
Fig. 2 is a left side view of the compressor shown in Fig. 1.
Fig. 3 is a partially enlarged view of a connection mechanism shown in Fig. 2.
Fig. 4 is a plan view of the compressor shown in Fig. 2.
Fig. 5 is a sectional view taken along the line A-A of the compressor shown in Fig. 2.
Fig. 6 is a partially enlarged view of a hermetic terminal shown in Fig. 5.
Fig. 7 is a plan view of the hermetic terminal shown in Fig. 6 as viewed from above.
Fig. 8 is a partially enlarged view of a connection structure according to a second embodiment of the present disclosure.

### Description of Embodiments

### [First Embodiment]

Hereinafter, a compressor 1 according to the first embodiment of the present disclosure will be described with reference to the drawings.

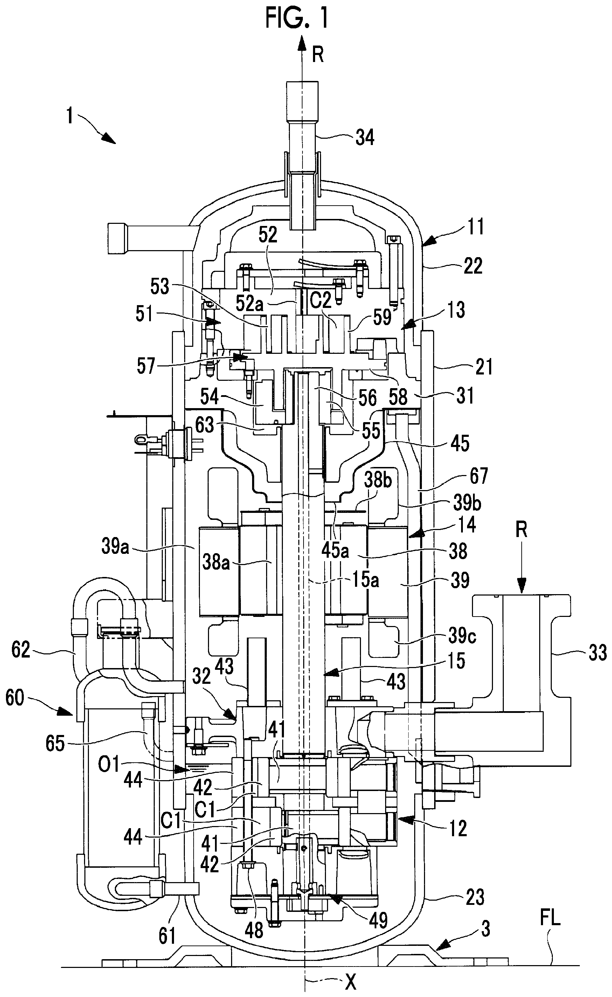

As shown in Fig. 1, the compressor (electric compressor) 1 is used in an air conditioner and performs two-stage compression of a refrigerant R which is gas such as carbon dioxide. The compressor 1 is fixed to an installation surface FL via a leg portion 3. The compressor 1 includes a housing 11, a rotary compression mechanism (low-stage compression mechanism) 12 provided inside the housing 11, a scroll compression mechanism (high-stage compression mechanism) 13, an electric motor 14, and a rotary shaft (rotary shaft portion) 15.

The housing 11 includes a body 21 extending in a cylindrical shape along the axis X, and an upper cover portion 22 and a lower cover portion 23 that close upper and lower openings of the body 21. The inside of the housing 11 accommodates each part of the compressor 1 including the electric motor 14, the rotary compression mechanism 12, and the scroll compression mechanism 13. The inside of the housing 11 forms a sealed space.

The rotary shaft 15 is provided to extend vertically along an axis X inside the housing 11. The upper end (one end) side of the rotary shaft 15 is rotatably supported by an upper bearing 31. The lower end (the other end) side of the rotary shaft 15 is rotatably supported by a lower bearing 32.

The electric motor 14 is disposed at the center of the rotary shaft 15 in the longitudinal direction and on the outer peripheral side of the rotary shaft 15, and rotates the rotary shaft 15 around the axis X. The electric motor 14 faces a rotor 38 fixed to the outer peripheral surface of the rotary shaft 15 in the radial direction with a gap interposed between the rotor 38 and the outer peripheral surface of the rotor 38, and has a stator 39 which is fixed by being shrink-fitted to the inner wall of the body 21 of the housing 11 and so on.

The rotary compression mechanism 12 is driven by the electric motor 14 to compress the refrigerant R. The scroll compression mechanism 13 is driven by the electric motor and further compresses the refrigerant R compressed by the rotary compression mechanism 12.

The rotor 38 is provided with rotor passages 38a which are provided with predetermined intervals in the circumferential direction. Each rotor passage 38a penetrates the rotor 38 in the vertical direction (axis X direction). The refrigerant R, which are discharged from the rotary compression mechanism 12, flows upward through the rotor passages 38a. An oil separation plate 38b is fixed to an upper portion of the rotor 38. The oil separation plate 38b has a disk shape and is disposed to extend in the horizontal direction. The oil separation plate 38b rotates around the axis X together with the rotor 38.

A plurality of stator passages 39a are formed on the outer periphery of the stator 39 with predetermined angular intervals in the circumferential direction. As shown in Fig. 1, an upper coil end 39b, in which the winding is folded, is located in an upper portion of the stator 39, and a lower coil end 39c, in which the winding is folded, is located in a lower portion of the stator 39. The electric motor 14 is connected to a power source via an inverter (not shown in the drawing), and rotates the rotary shaft 15 with a variable frequency.

The rotary compression mechanism 12 is provided inside the housing 11 on the lower end (the other end) side of the rotary shaft 15. The rotary compression mechanism 12 is a two-cylinder mechanism in the present embodiment, and includes an eccentric shaft portion 41 which is provided on the rotary shaft 15, a rotor 42 which is fixed to the eccentric shaft portion 41 and is eccentric with respect to the axis X as the rotary shaft 15 rotates to rotate in a compression chamber C1, and a cylinder 44 in which the compression chamber C1 is formed.

The refrigerant R is supplied from a suction pipe 33 to the compression chamber C1 formed in the cylinder 44. The refrigerant compressed in the compression chamber C1 is discharged from a rotary discharge pipe 43 to a region below the electric motor 14 in the housing 11 via the lower bearing 32.

The cylinder 44 is fixed to the lower bearing 32 from the lower side by a bolt 48. An oil pump 49, which is fixed by the bolt 48 together with the cylinder 44, is provided below the cylinder 44. Oil is sucked from an oil reservoir O1 at the lower portion of the housing 11 by the oil pump 49, passes through an oil supply hole 15a penetrated along the axis X of the rotary shaft 15, and is guided toward the upper bearing 31.

The scroll compression mechanism 13 is disposed inside the housing 11 above the electric motor 14. The scroll compression mechanism 13 includes a fixed scroll 51 fixed to the upper bearing 31, and an orbiting scroll 57 disposed below the fixed scroll 51 to face the fixed scroll 51.

The fixed scroll 51 has an end plate 52 fixed to an upper surface of the upper bearing 31, and a fixed wrap 53 protruding downward from the end plate 52. A discharge hole 52a penetrating upward and downward is formed in a central portion (in the vicinity of the axis X) of the end plate 52.

The orbiting scroll 57 is disposed to be interposed between the upper bearing 31 and the fixed scroll 51. The orbiting scroll 57 has an end plate 58 connected to the upper end side of the rotary shaft 15, and an orbiting wrap 59 protruding upward from the end plate 58. The orbiting scroll 57 revolves around the axis X with respect to the fixed scroll 51.

The end plate 58 is fixed to an eccentric shaft portion 56 provided at the upper end of the rotary shaft 15 via a bush 55, and rotates eccentrically with respect to the axis X as the rotary shaft 15 rotates.

The orbiting wrap 59 meshes with the fixed wrap 53 to form a compression chamber C2 for compressing the refrigerant R between the orbiting wrap 59 and the fixed wrap 53.

A balance weight chamber 63 is formed between a recessed portion on the central side of the upper bearing 31 and the lower portion of the orbiting scroll 57. In the balance weight chamber 63, the balance weight 54 rotates together with the rotary shaft 15.

The refrigerant R, which is compressed by the rotary compression mechanism 12 and discharged into the housing 11, is sucked into the compression chamber C2 from the outer peripheral side of the scroll compression mechanism 13 and is compressed toward the central side. The compressed refrigerant R is discharged from a discharge pipe 34 to the outside of the housing 11 via the discharge hole 52a of the fixed scroll 51.

A cover 45 is provided below the upper bearing 31 to cover the upper bearing 31. The cover 45 is formed by sheet metal processing, and has a substantially conical shape of which a diameter is increased from the lower side to the upper side. A suction opening 45a is provided at the lower end of the cover 45. That is, the suction opening 45a faces downward and is an annular region formed between the cover 45 and the rotary shaft 15. The space below the housing 11 and the space on the upper bearing 31 side are partitioned by the cover 45, and only the refrigerant, which is sucked from the suction opening 45a, is guided to the scroll compression mechanism 13.

An oil level tank 60 is provided outside and below the housing 11. The oil level tank 60 is regarded as a hollow container and communicates with the inside of the housing 11 via a lower pipe 61 and an upper pressure equalization pipe 62. The oil level tank 60 measures the oil level of the oil reservoir O1 by guiding the oil from the oil reservoir O1 in the housing 11 via the lower pipe 61.

A downstream end of the oil separator oil return pipe 65 is connected to a lower side portion of the housing 11. An upstream end of the oil separator oil return pipe 65 is connected to an oil separator (not shown in the drawing). The oil, which is separated from the refrigerant discharged from the compressor 1 by the oil separator, is returned to the oil reservoir O1 in the housing 11 via the oil separator oil return pipe 65. A height position, at which the downstream end of the oil separator oil return pipe 65 is connected to the housing 11, is set below the lower bearing 32.

An oil return pipe 67, which extends in the vertical direction while coming into contact with the inner wall of the housing 11, is provided inside the housing 11. The oil return pipe 67 is provided such that an upper end (one end) thereof is fixed to the upper bearing 31 and a lower end (the other end) thereof is positioned at the oil reservoir O1 in the lower portion of the housing 11.

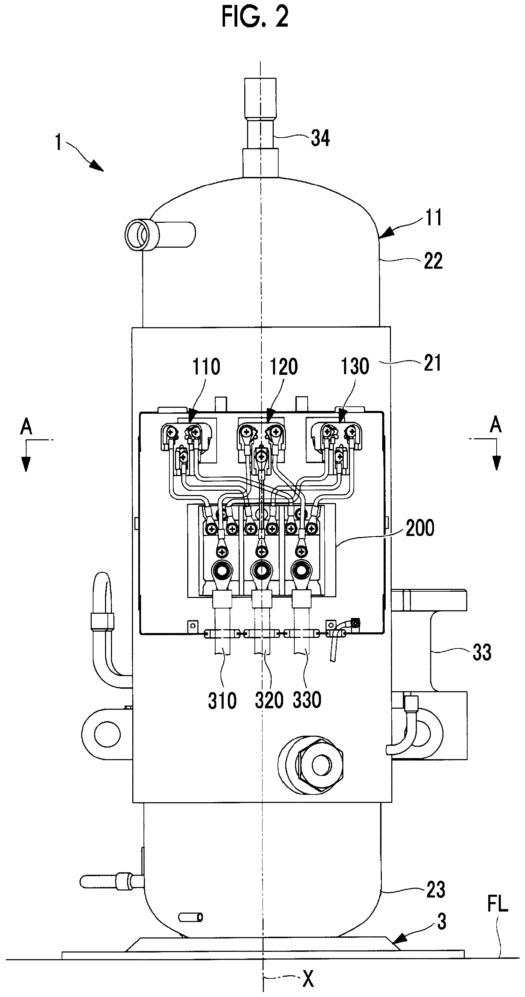

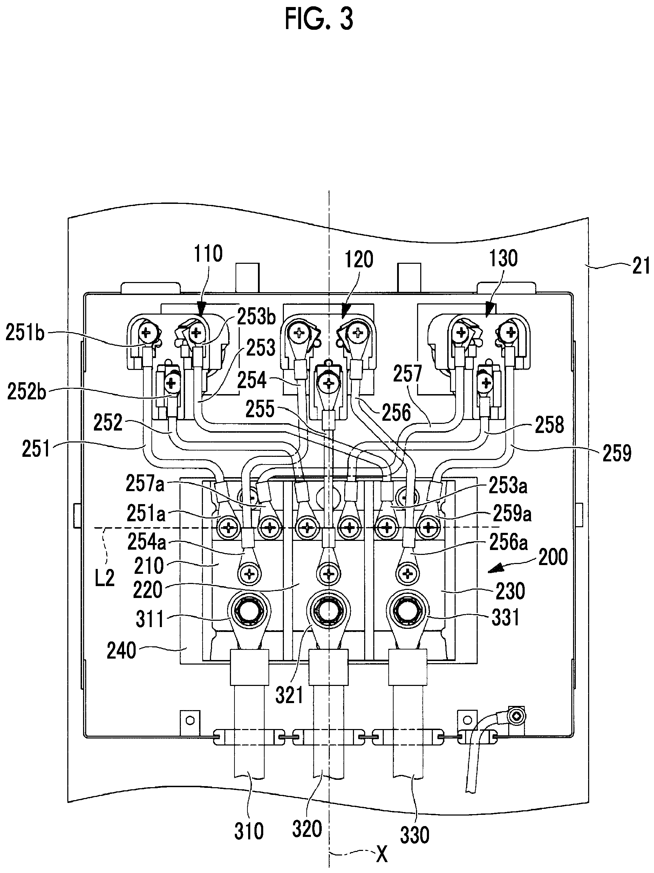

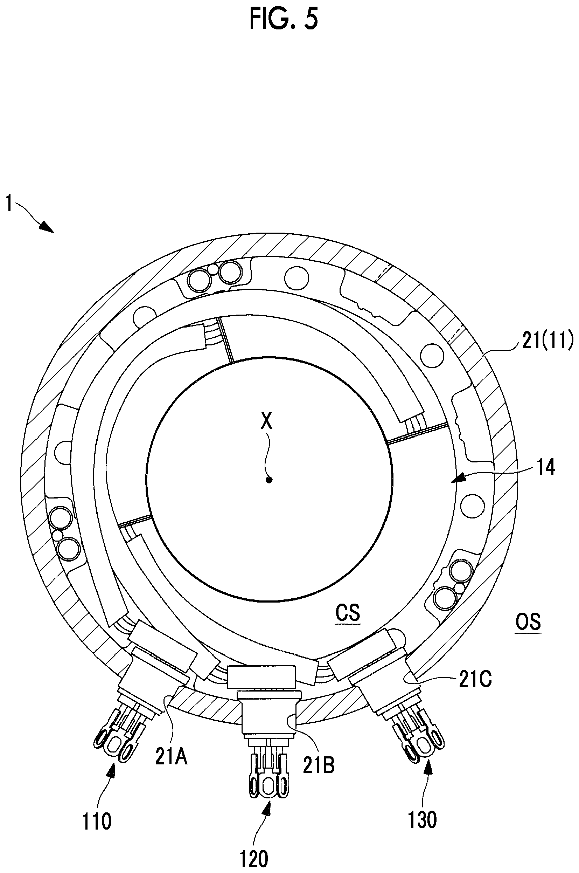

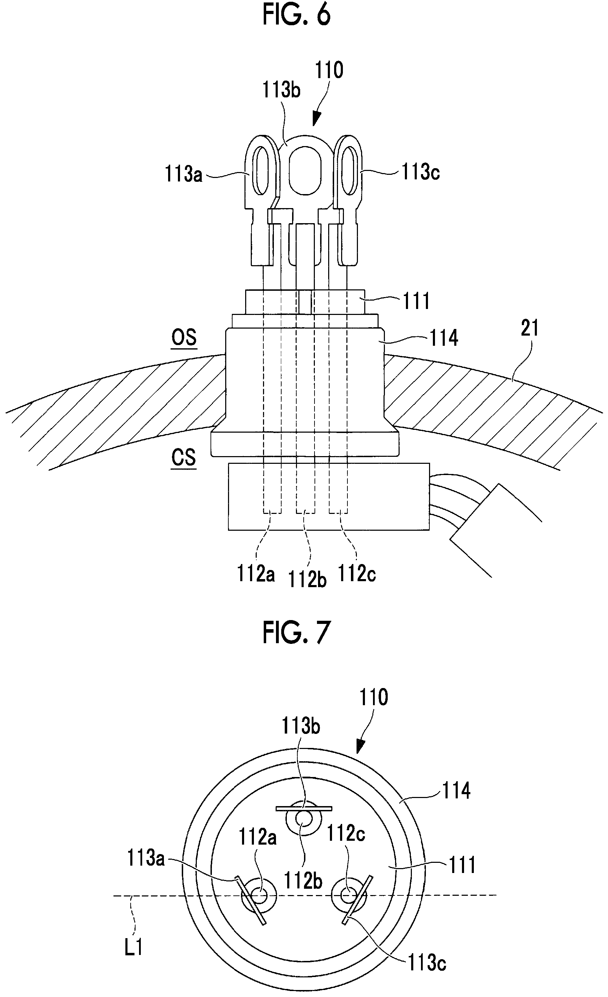

Next, the hermetic terminals 110, 120, and 130 included in the compressor 1 of the present embodiment will be described with reference to Figs. 2, 3, and 5 to 7. Fig. 2 is a left side view of the compressor 1 shown in Fig. 1. Fig. 3 is a partially enlarged view of a connection mechanism 200 shown in Fig. 2. Fig. 5 is a cross-sectional view taken along the line A-A of the compressor 1 shown in Fig. 2. Fig. 6 is a partially enlarged view of the hermetic terminal 120 shown in Fig. 5. Fig. 7 is a plan view of the hermetic terminal 120 shown in Fig. 6 as viewed from above.

As shown in Figs. 2, 3, and 5, the compressor 1 includes the three hermetic terminals 110, 120, and 130, and the connection mechanism 200. As shown in Fig. 5, three through-holes 21A, 21B, and 21C are formed in the body 21 of the housing 11. The hermetic terminal 110 is inserted into the through-hole 21A, the hermetic terminal 120 is inserted into the through-hole 21B, and the hermetic terminal 130 is inserted into the through-hole 21C.

The hermetic terminals 110, 120, and 130 are respectively joined to the through-holes 21A, 21B, and 21C through welding. The hermetic terminals 110, 120, and 130 are sealed such that a sealed space CS and an outer space OS do not communicate with each other.

Here, the details of the structure of the hermetic terminal 110 will be described with reference to Figs. 6 and 7. Since the structures of the hermetic terminals 120 and 130 are the same as the structures of the hermetic terminals 110, the following description will not be given.

As shown in Figs. 6 and 7, the hermetic terminal 110 has an insulation part 111, three pins 112a, 112b, and 112c, three straps 113a, 113b, and 113c, and a casing 114.

The insulation part 111 is formed of an insulation material and is a member that holds the three pins 112a, 112b, and 112c in an insulated state in which the three pins 112a, 112b, and 112c do not conduct with each other. The insulation part 111 is fixed to the casing 114. The three pins 112a, 112b, and 112c are conductive members each of which is inserted into the insulation part 111 such that one end thereof on the outer space OS side and the other end thereof on the sealed space CS side protrude.

As shown in Fig. 6, the three pins 112a, 112b, and 112c are respectively formed to extend in the same direction (the vertical direction in Fig. 6). As shown in Fig. 7, at a position at which the straight line L1 connecting a position (first disposition position) where the pin (first pin) 112a is disposed and a position (second disposition position) where the pin (second pin) 112c is disposed does not pass, on a plane orthogonal to a direction (predetermined direction) where the three pins 112a, 112b, and 112c extend, the pin (the other pin) 112b is disposed.

The three straps 113a, 113b, and 113c are conductive members and are each fixed to one end of each of the three pins 112a, 112b, and 112c on the outer space OS side. Each one of linking cables 251, 252, and 253 shown in Fig. 3 is electrically connected to each of the three straps 113a, 113b, and 113c via each of crimping terminals 251b, 252b, and 253b.

Each one of the linking cables 254, 255, and 256 shown in Fig. 3 is electrically connected to each of the three straps (not shown in the drawing) of the hermetic terminal 120. Each one of the linking cables 257, 258, and 259 shown in Fig. 3 is electrically connected to each of the three straps (not shown in the drawing) included in the hermetic terminal 130.

Next, the connection mechanism 200 will be described with reference to Figs. 2 to 4. The connection mechanism 200 is a mechanism that is fixed to the body 21 of the housing 11 and electrically connects the hermetic terminals 110, 120, and 130 to the U-phase cable 310, the V-phase cable 320, and the W-phase cable 330.

As shown in Fig. 3, the connection mechanism 200 has three bus bars 210, 220, and 230, a terminal block 240, and nine linking cables 251, 252, 253, 254, 255, 256, 257, 258, and 259.

Each of the three bus bars 210, 220, and 230 is a member formed of a conductive metallic material. One U-phase cable (external cable) 310 is electrically connected to the bus bar 210 via the crimping terminal 311. One V-phase cable (external cable) 320 is electrically connected to the bus bar 220 via the crimping terminal 321. One W-phase cable (external cable) 330 is electrically connected to the bus bar 230 via the crimping terminal 331.

The terminal block 240 is a structure to which the bus bars 210, 220, and 230 are fixed and in which the body 21 of the housing 11 is installed. The terminal block 240 is installed in the body 21 such that the bus bars 210, 220, and 230 maintain the insulated state with respect to the body 21 of the housing 11.

The three linking cables 251, 254, and 257, which are respectively connected to the hermetic terminals 110, 120, and 130, are connected to the bus bar 210 via crimping terminals 251a, 254a, and 257a. The three linking cables 252, 255, and 258, which are respectively connected to the hermetic terminal 110, 120, and 130, are connected to the bus bar 220 via crimping terminals. The three linking cables 253, 256, and 259, which are respectively connected to the hermetic terminal 110, 120, and 130, are connected to the bus bar 230 via crimping terminals 253a, 256a, and 259a.

As shown in Fig. 3, the three linking cables 251, 254, and 257 are connected to the bus bar 210. At a position at which a straight line L2 connecting a position (first connection position) of the crimping terminal 251a through which the linking cable (first linking cable) 251 is connected to the bus bar 210 and a position (second connection position) of the crimping terminal 257a through which the linking cable (second linking cable) 257 is connected to the bus bar 210 does not pass, the linking cable (the other linking cable) 254 is connected to the bus bar 210 at the position of the crimping terminal 254a.

Here, three linking cables are respectively connected to the bus bars 210, 220, and 230 but other aspects may be used. For example, it may be assumed that the hermetic terminals 110, 120, and 130 each include an optional number of pins of 3 or more, and an optional number of linking cables of 3 or more are connected to each of the bus bars 210, 220, and 230.

The U-phase cable 310, the V-phase cable 320, and the W-phase cable 330 each are connected to a UVW output terminal of a control unit (not shown in the drawing) that outputs a three-phase AC current applied to the electric motor 14. The U-phase cable 310 transmits a U-phase current via the bus bar 210 to the hermetic terminals 110, 120, and 130 via the linking cables 251, 254, and 257.

The V-phase cable 320 transmits a V-phase current via the bus bar 220 to the hermetic terminals 110, 120, and 130 via the linking cables 252, 255, and 258. The W-phase cable 330 transmits a W-phase current via the bus bar 230 to the hermetic terminals 110, 120, and 130 via the linking cables 253, 256, and 259.

The electric motor 14 of the present embodiment is a three-phase AC motor that has a U terminal, a V terminal, and a W terminal. The three pins 112a, 112b, and 112c of the hermetic terminal 110, which is inserted into the through-hole 21A, are respectively connected to the U terminal, the V terminal, and the W terminal of the electric motor 14. The three pins of the hermetic terminal 120, which is inserted into the through-hole 21B, are respectively connected to the U terminal, the V terminal, and the W terminal of the electric motor 14. The three pins of the hermetic terminal 130, which is inserted into the through-hole 21C, are respectively connected to the U terminal, the V terminal, and the W terminal of the electric motor 14.

The three straps 113a, 113b, and 113c, which are fixed to the hermetic terminal 110, are connected to the bus bar 210 through the three linking cables 251, 254, and 257. The three straps, which are fixed to the hermetic terminal 120, are connected to the bus bar 220 through the three linking cables 252, 255, and 258. The three straps, which are fixed to the hermetic terminal 130, are connected to the bus bar 230 through the three linking cables 253, 256, and 259.

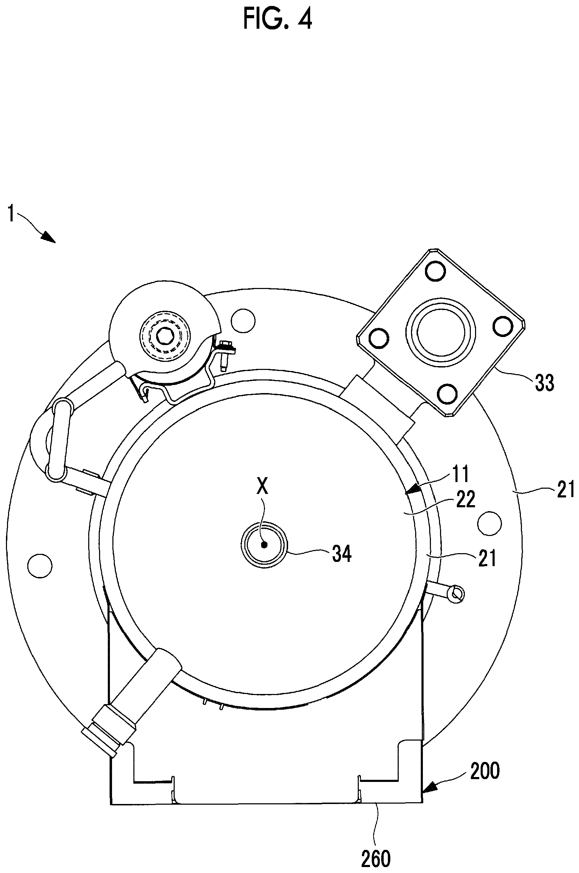

As shown in Fig. 4, the connection mechanism 200 has a covering member 260. The covering member 260 protects the three bus bars 210, 220, and 230, the terminal block 240, and the nine linking cables 251, 252, 253, 254, 255, 256, 257, 258, and 259 such that those are not exposed to the outside. Figs. 2 and 3 show a state in which the covering member 260 is removed from the connection mechanism 200.

The operations and effects of the compressor 1 of the present embodiment described above will be described.

In the compressor 1 according to the present embodiment, the plurality of through-holes 21A, 21B, and 21C are formed in the body 21 of the housing 11 that accommodates the electric motor 14, the rotary compression mechanism 12, and the scroll compression mechanism 13 in the sealed space CS. The plurality of hermetic terminals 110, 120, and 130 are respectively inserted into the plurality of through-holes 21A, 21B, and 21C.

Each of the plurality of straps 113a, 113b, and 113c is fixed to one end of each of the plurality of pins 112a, 112b, and 112c of the hermetic terminal 110, and each one of the linking cables 251, 254, and 257 is connected to each of the plurality of straps 113a, 113b, and 113c. The connection mechanism 200, which electrically connects the hermetic terminals 110, 120, and 130 to the U-phase cable 310, the V-phase cable 320, and the W-phase cable 330, is fixed to the body 21 of the housing 11. The connection mechanism 200 has the plurality of bus bars 210, 220, and 230 which are conductive and the terminal block 240 which fixes the plurality of bus bars 210, 220, and 230.

In the compressor 1 according to the present disclosure, each one of the linking cables 251, 254, and 257 is connected to each of the plurality of straps 113a, 113b, and 113c, the plurality of linking cables 251, 254, and 257 are connected to the bus bar 210, the plurality of linking cables 252, 255, and 258 are connected to the bus bar 220, and the plurality of linking cables 253, 256, and 259 are connected to the bus bar 230.

The plurality of linking cables 251, 254, and 257 are combined into one bus bar 210 and then connected to the U-phase cable 310. The plurality of linking cables 252, 255, and 258 are combined into one bus bar 220 and then connected to the V-phase cable 320. The plurality of linking cables 253, 256, and 259 are combined into one bus bar 230 and then connected to the W-phase cable 330. Therefore, as compared with a case where each of the plurality of straps is directly connected to the external cable, it is possible to deal with an increase in current without increasing the number of the external cables.

In the compressor 1 according to the present embodiment, the U terminal, the V terminal, and the W terminal of the electric motor 14 are respectively connected to the plurality of pins 112a, 112b, and 112c of the hermetic terminal 110 inserted into the through-hole 21A. The U terminal, the V terminal, and the W terminal of the electric motor 14 are respectively connected to the plurality of pins of the hermetic terminal 120 inserted into the through-hole 21B. The U terminal, the V terminal, and the W terminal of the electric motor 14 are respectively connected to the plurality of pins of the hermetic terminal 130 inserted into the through-hole 21C. The combinations of the terminals of the electric motor 14 connected to the respective hermetic terminals 110, 120, and 130 are the same. Therefore, it is possible to suppress occurrence of work errors in which there are errors in combinations of the wiring connecting the pins of the respective hermetic terminals and the respective terminals of the electric motor.

In the compressor 1 according to the present embodiment, on a plane orthogonal to a predetermined direction in which the pins 112a, 112b, and 112c extend, with respect to the first pin 112a and the second pin 112c, the other pin 112b is not disposed on the same straight line. Therefore, as compared with a case where all of the first pin 112a, the second pin 112c, and the other pin 112b are arranged on the same straight line, the installation intervals of the pins 112a, 112b, and 112c in the linear direction are shortened, and the installation areas of the plurality of pins 112a, 112b, and 112c can be reduced.

In the compressor 1 according to the present embodiment, in the bus bar 210 (230), at a position on the same straight line relative to a first connection position at which the crimping terminal 251a (253a) of the first linking cable 251 (253) is connected, and a second connection position at which the crimping terminal 257a (259a) of the second linking cable 257 (259) is connected, the other linking cable 254 (256) is not connected.

Therefore, as compared with a case where the first linking cable 251 (253), the second linking cable 257 (259), and the other linking cable 254 (256) are all connected at positions on the same straight line, the installation areas of the crimping terminals 251a, 254a, and 257a (253a, 256a, 259a) of the plurality of linking cables 251, 254, and 257 (253, 256, 259) can be reduced by shortening the interval between the connection positions of the linking cables in the linear direction.

### [Second Embodiment]

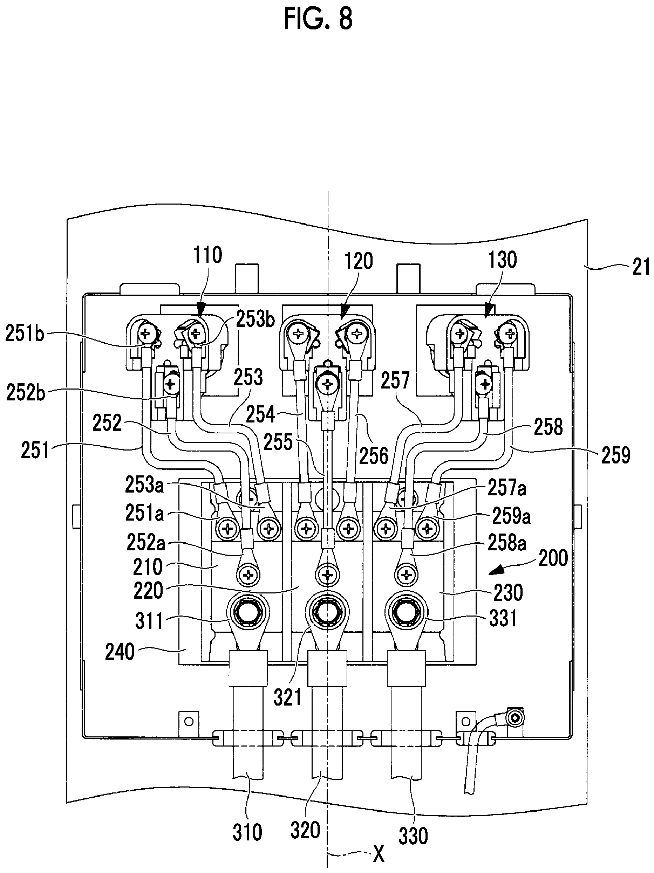

Next, a second embodiment of the present disclosure will be described with reference to Fig. 8. Fig. 8 is a partially enlarged view of the connection mechanism 200 according to the second embodiment of the present disclosure. The present embodiment is a modification example of the first embodiment and is assumed to be the same as the first embodiment except for a case particularly described below, and the same description will not be given below.

In the first embodiment, the three pins 112a, 112b, and 112c of the hermetic terminal 110, which is inserted into the through-hole 21A, are respectively connected to the U terminal, the V terminal, and the W terminal of the electric motor 14. The three pins of the hermetic terminal 120, which is inserted into the through-hole 21B, are respectively connected to the U terminal, the V terminal, and the W terminal of the electric motor 14. The three pins of the hermetic terminal 130, which is inserted into the through-hole 21C, are respectively connected to the U terminal, the V terminal, and the W terminal of the electric motor 14.

Meanwhile, in the present embodiment, the three pins 112a, 112b, and 112c of the hermetic terminal 110, which is inserted into the through-hole 21A, are connected to the U terminal of the electric motor 14. The three pins of the hermetic terminal 120, which is inserted into the through-hole 21B, are connected to the V terminal of the electric motor 14. The three pins of the hermetic terminal 130, which is inserted into the through-hole 21C, are connected to the W terminal of the electric motor 14.

As shown in Fig. 8, the three linking cables 251, 252, and 253, each of which is connected to the hermetic terminal 110, are connected to the bus bar 210 via crimping terminals 251a, 252a, and 253a. The three linking cables 254, 255, and 256, each of which is connected to the hermetic terminal 120, are connected to the bus bar 220 via the crimping terminals. The three linking cables 257, 258, and 259, each of which is connected to the hermetic terminal 130, are connected to the bus bar 230 via the crimping terminals 257a, 258a, and 259a.

As shown in Fig. 8, each of the three straps 113a, 113b, and 113c, which are fixed to the hermetic terminal 110, is connected to the bus bar 210 through each of the three linking cables 251, 252, and 253. Each of the three straps, which are fixed to the hermetic terminal 120, is connected to the bus bar 220 through each of the three linking cables 254, 255, and 256. Each of the three straps, which are fixed to the hermetic terminal 130, is connected to the bus bar 230 through each of the three linking cables 257, 258, and 259.

In the compressor 1 according to the present embodiment, each one of the linking cables 251, 252, 253 is connected to each of the plurality of straps 113a, 113b, and 113c, and the plurality of linking cables 251, 252, 253 are connected to the bus bar 210, the plurality of linking cables 254, 255, and 256 are connected to the bus bar 220, and the plurality of linking cables 257, 258, and 259 are connected to the bus bar 230.

The plurality of linking cables 251, 252, and 253 are combined into one bus bar 210 and then connected to the U-phase cable 310. The plurality of linking cables 254, 255, and 256 are combined into one bus bar 220 and then connected to the V-phase cable 320. The plurality of linking cables 257, 258, and 259 are combined into one bus bar 230 and then connected to the W-phase cable 330. Therefore, as compared with a case where each of the plurality of straps is directly connected to the external cable, it is possible to deal with an increase in current without increasing the number of the external cables.

In the compressor 1 according to the present embodiment, the U terminal is connected to the plurality of pins 112a, 112b, 112c of the hermetic terminal 110 inserted into the first through-hole 21A, the V terminal is connected to the plurality of pins of the hermetic terminal 120 inserted into the second through-hole 21B, and the W terminal is connected to the plurality of pins of the hermetic terminal 130 inserted into the third through-hole 21C. The same type of the terminals of the electric motor 14 are connected to one hermetic terminal, and the types of the hermetic terminal and the terminal of the electric motor are associated with each other. Therefore, the lengths of the linking cables connecting the hermetic terminals and the bus bars can be shortened.

### Reference Signs List

1: compressor
11: housing
12: rotary compression mechanism
13: scroll compression mechanism
14: electric motor
21: body
21A, 21B, 21C: through-hole
110, 120, 130: hermetic terminal
111: insulation part
112a, 112b, 112c: pin
113a, 113b, 113c: strap
114: casing
200: connection mechanism
210: bus bar
220: bus bar
230: bus bar
240: terminal block
251, 252, 253, 254, 255, 256, 257, 258, 259: linking cable
251a, 251b, 252a, 252b, 253a, 253b, 257a, 258a, 259a: crimping terminal
260: covering member
310: U-phase cable (external cable)
311, 321, 331: crimping terminal
320: V-phase cable (external cable)
330: W-phase cable (external cable)
CS: sealed space
OS: outer space
R: refrigerant
X: axis

## Claims

1. An electric compressor (1) comprising:
an electric motor (14);
a compression mechanism (12,13) that is driven by the electric motor (14) to compress a refrigerant;
a housing (11) that accommodates the electric motor (14) and the compression mechanism (12, 13) in a sealed space;
a plurality of hermetic terminals (110, 120, 130) that are respectively inserted into a plurality of through-holes (21A, 21B, 21C) formed in the housing (11) and that are sealed not to communicate the sealed space with an outer space; and
a connection mechanism (200) that is fixed to the housing (11) and that electrically connects the hermetic terminals (110, 120, 130) to a plurality of external cables,
wherein each hermetic terminal (110, 120, 130) has
an insulation part (111) which is formed of an insulation material,
a plurality of pins (112a, 112b, 112c) each of which is conductive and is inserted into the insulation part (111) such that one end and the other end thereof protrude, and
**characterised by**
a plurality of straps (113a, 113b, 113c) each of which is fixed to each one end of the plurality of pins (112a, 112b, 112c),
the connection mechanism (200) has
a plurality of bus bars (210, 220, 230) each of which is conductive and is connected to each one of the external cables,
a terminal block (240) to which the plurality of bus bars (210, 220, 230) are fixed and which is installed in the housing (11), and
a plurality of linking cables (251-259) each of which is connected to each one of the plurality of straps (113a, 113b, 113c), and
the plurality of linking cables (251-259) are respectively connected to the plurality of bus bars (210, 220, 230).

2. The electric compressor (1) according to claim 1,
wherein the electric motor (14) is a three-phase AC motor having a U terminal, a V terminal, and a W terminal,
the plurality of through-holes (21A, 21B, 21C) are formed in the housing (11),
three of the pins (112a, 112b, 112c) of a first hermetic terminal (110) inserted into a first through-hole (21A) are respectively connected to the U terminal, the V terminal, and the W terminal,
three of the pins (112a, 112b, 112c) of a second hermetic terminal (120) inserted into a second through-hole (21B) are respectively connected to the U terminal, the V terminal, and the W terminal,
three of the straps (113a, 113b, 113c) fixed to the first hermetic terminal (110) are respectively connected to a first bus bar (210), a second bus bar (220), and a third bus bar (230) through the plurality of linking cables (254, 255, 256), and
three of the straps (113a, 113b, 113c) fixed to the second hermetic terminal (120) are respectively connected to the first bus bar (210), the second bus bar (220), and the third bus bar (230) through the plurality of linking cables (254, 255, 256).

3. The electric compressor (1) according to claim 1,
wherein the electric motor (14) is a three-phase AC motor having a U terminal, a V terminal, and a W terminal,
three of the through-holes (21A, 21B, 21C) are formed in the housing (11),
the plurality of pins (112a, 112b, 112c) of a first hermetic terminal (110) inserted into a first through-hole (21A) are connected to the U terminal,
the plurality of pins (112a, 112b, 112c) of a second hermetic terminal (120) inserted into a second through-hole (21B) are connected to the V terminal,
the plurality of pins (112a, 112b, 112c) of a third hermetic terminal (130) inserted into a third through-hole (21C) are connected to the W terminal,
the plurality of straps (113a, 113b, 113c) fixed to the first hermetic terminal (110) are connected to a first bus bar (210) through the plurality of linking cables (254, 255, 256),
the plurality of straps (113a, 113b, 113c) fixed to the second hermetic terminal (120) are connected to a second bus (220) bar through the plurality of linking cables (254, 255, 256), and
the plurality of straps (113a, 113b, 113c) fixed to the third hermetic terminal (130) are connected to a third bus bar (230) through the plurality of linking cables (254, 255, 256).

4. The electric compressor (1) according to any one of claims 1 to 3,
wherein the plurality of pins (112a, 112b, 112c) are formed to extend along a predetermined direction, and
at a position at which a straight line connecting a first disposition position where a first pin (112a) is disposed and a second disposition position where a second pin (112b) is disposed does not pass on a plane orthogonal to the predetermined direction, the other pin (112c) is disposed.

5. The electric compressor (1) according to any one of claims 1 to 4,
wherein three or more of the linking cables (251-259) are respectively connected to the plurality of bus bars (210, 220, 230), and
at a position at which a straight line connecting a first connection position where a first linking cable (251) is connected to a predetermined bus bar (210) and a second connection position where a second linking cable (257) is connected to the predetermined bus bar (210) does not pass, the other linking cable (254) is connected.

## Patentansprüche

1. Elektrischer Kompressor (1) umfassend:
einen Elektromotor (14);
einen Kompressionsmechanismus (12, 13), der von dem Elektromotor (14) angetrieben wird, um ein Kältemittel zu komprimieren;
ein Gehäuse (11), das den Elektromotor (14) und den Kompressionsmechanismus (12, 13) in einem abgedichteten Raum aufnimmt;
eine Mehrzahl von hermetischen Anschlüssen (110, 120, 130), die jeweils in eine Mehrzahl von Durchgangslöchern (21A, 21B, 21C) eingesetzt sind, die in dem Gehäuse (11) ausgebildet sind, und die so abgedichtet sind, dass der abgedichtete Raum nicht mit dem Außenraum in Verbindung ist; und
einen Verbindungsmechanismus (200), der an dem Gehäuse (11) befestigt ist und der die hermetischen Anschlüsse (110, 120, 130) elektrisch mit einer Mehrzahl von externen Kabeln verbindet,
wobei jeder hermetische Anschluss (110, 120, 130) aufweist
einen Isolierteil (111), der aus einem Isoliermaterial gebildet ist,
eine Mehrzahl von Stiften (112a, 112b, 112c), von denen jeder leitfähig ist und in den Isolierteil (111) eingesetzt ist, sodass ein Ende und das andere Ende davon herausragen, und
**gekennzeichnet durch**
eine Mehrzahl von Bändern (113a, 113b, 113c), von denen jedes an jedem einen Ende der Mehrzahl von Stiften (112a, 112b, 112c) befestigt ist,
wobei der Verbindungsmechanismus (200) aufweist
eine Mehrzahl von Sammelschienen (210, 220, 230), von denen jede leitfähig ist und mit jedem der externen Kabel verbunden ist,
einen Anschlussblock (240), an dem die Mehrzahl von Sammelschienen (210, 220, 230) befestigt sind, und der in dem Gehäuse (11) installiert ist, und eine Mehrzahl von Verbindungskabeln (251-259), von denen jedes mit jedem der Mehrzahl von Bändern (113a, 113b, 113c) verbunden ist, und
wobei die Mehrzahl von Verbindungskabeln (251-259) jeweils mit der Mehrzahl von Sammelschienen (210, 220, 230) verbunden sind.

2. Elektrischer Kompressor (1) nach Anspruch 1,
wobei der Elektromotor (14) ein Dreiphasen-AC-Motor mit einem U-Anschluss, einem V-Anschluss und einem W-Anschluss ist,
die Mehrzahl von Durchgangslöchern (21A, 21B, 21C) in dem Gehäuse (11) ausgebildet sind,
drei der Stifte (112a, 112b, 112c) eines ersten hermetischen Anschlusses (110), der in ein erstes Durchgangsloch (21A) eingesetzt ist, mit dem U-Anschluss, dem V-Anschluss bzw. dem W-Anschluss verbunden sind,
drei der Stifte (112a, 112b, 112c) eines zweiten hermetischen Anschlusses (120), der in ein zweites Durchgangsloch (21B) eingesetzt ist, mit dem U-Anschluss, dem V-Anschluss bzw. dem W-Anschluss verbunden sind,
drei der Bänder (113a, 113b, 113c), die an dem ersten hermetischen Anschluss (110) befestigt sind, über die Mehrzahl von Verbindungskabeln (254, 255, 256) mit einer ersten Sammelschiene (210), einer zweiten Sammelschiene (220) bzw. einer dritten Sammelschiene (230) verbunden sind, und
drei der Bänder (113a, 113b, 113c), die an dem zweiten hermetischen Anschluss (120) befestigt sind, über die Mehrzahl von Verbindungskabeln (254, 255, 256) mit der ersten Sammelschiene (210), der zweiten Sammelschiene (220) bzw. der dritten Sammelschiene (230) verbunden sind.

3. Elektrischer Kompressor (1) nach Anspruch 1,
wobei der Elektromotor (14) ein Dreiphasen-AC-Motor mit einem U-Anschluss, einem V-Anschluss und einem W-Anschluss ist,
drei der Durchgangslöcher (21A, 21B, 21C) in dem Gehäuse (11) ausgebildet sind,
die Mehrzahl von Stiften (112a, 112b, 112c) eines ersten hermetischen Anschlusses (110), der in ein erstes Durchgangsloch (21A) eingesetzt ist, mit dem U-Anschluss verbunden sind,
die Mehrzahl von Stiften (112a, 112b, 112c) eines zweiten hermetischen Anschlusses (120), der in ein zweites Durchgangsloch (21B) eingesetzt ist, mit dem V-Anschluss verbunden sind,
die Mehrzahl von Stiften (112a, 112b, 112c) eines dritten hermetischen Anschlusses (130), der in ein drittes Durchgangsloch (21C) eingesetzt ist, mit dem W-Anschluss verbunden sind,
die Mehrzahl von Bändern (113a, 113b, 113c), die an dem ersten hermetischen Anschluss (110) befestigt sind, über die Mehrzahl von Verbindungskabeln (254, 255, 256) mit einer ersten Sammelschiene (210) verbunden sind,
die Mehrzahl von Bändern (113a, 113b, 113c), die an dem zweiten hermetischen Anschluss (120) befestigt sind, über die Mehrzahl von Verbindungskabeln (254, 255, 256) mit einer zweiten Sammelschiene (220) verbunden sind, und
die Mehrzahl von Bändern (113a, 113b, 113c), die an dem dritten hermetischen Anschluss (130) befestigt sind, über die Mehrzahl von Verbindungskabeln (254, 255, 256) mit einer dritten Sammelschiene (230) verbunden sind.

4. Elektrischer Kompressor (1) nach einem der Ansprüche 1 bis 3,
wobei die Mehrzahl von Stiften (112a, 112b, 112c) so ausgebildet sind, dass sie sich entlang einer vorbestimmten Richtung erstrecken, und
an einer Position, an der eine gerade Linie, die eine erste Anordnungsposition, wo ein erster Stift (112a) angeordnet ist, mit einer zweiten Anordnungsposition, wo ein zweiter Stift (112b) angeordnet ist, verbindet, nicht auf einer Ebene orthogonal zu der vorbestimmten Richtung verläuft, der andere Stift (112c) angeordnet ist.

5. Elektrischer Kompressor (1) nach einem der Ansprüche 1 bis 4,
wobei drei oder mehr der Verbindungskabel (251-259) jeweils mit der Mehrzahl von Sammelschienen (210, 220, 230) verbunden sind, und
an einer Position, an der eine gerade Linie, die eine erste Verbindungsposition, wo ein erstes Verbindungskabel (251) mit einer vorbestimmten Sammelschiene (210) verbunden ist, und eine zweite Verbindungsposition, wo ein zweites Verbindungskabel (257) mit der vorbestimmten Sammelschiene (210) verbunden ist, verbindet, nicht verläuft, das andere Verbindungskabel (254) verbunden ist.

## Revendications

1. Compresseur électrique (1) comprenant :
un moteur électrique (14) ;
un mécanisme de compression (12, 13) qui est entraîné par le moteur électrique (14) pour comprimer un réfrigérant ;
un boîtier (11) qui loge le moteur électrique (14) et le mécanisme de compression (12, 13) dans un espace scellé ;
une pluralité de bornes hermétiques (110, 120, 130) qui sont respectivement insérées dans une pluralité de trous traversants (21A, 21B, 21C) formés dans le boîtier (11) et qui sont scellées pour ne pas faire communiquer l'espace scellé avec un espace extérieur ; et
un mécanisme de connexion (200) qui est fixé au boîtier (11) et qui connecte électriquement les bornes hermétiques (110, 120, 130) à une pluralité de câbles externes,
dans lequel chaque borne hermétique (110, 120, 130) comprend une partie d'isolation (111) constituée d'un matériau d'isolation,
une pluralité de fiches (112a, 112b, 112c), dont chacune est conductrice et est insérée dans la partie d'isolation (111) de manière à ce qu'une première extrémité et l'autre extrémité de celle-ci fassent saillie, et
**caractérisé par**
une pluralité de bandes (113a, 113b, 113c) dont chacune est fixée à chaque première extrémité de la pluralité de fiches (112a, 112b, 112c),
le mécanisme de connexion (200) comporte
une pluralité de barres omnibus (210, 220, 230), dont chacune est conductrice et est connectée à chacun des câbles externes,
un bornier (240) auquel sont fixées la pluralité de barres omnibus (210, 220, 230) et qui est installé dans le boîtier (11), et
une pluralité de câbles de liaison (251-259), dont chacun est connecté à chacune de la pluralité de bandes (113a, 113b, 113c), et
la pluralité de câbles de liaison (251-259) sont respectivement connectées à la pluralité de barres omnibus (210, 220, 230).

2. Compresseur électrique (1) selon la revendication 1,
dans lequel le moteur électrique (14) est un moteur triphasé à courant alternatif ayant une borne U, une borne V et une borne W,
la pluralité de trous traversants (21A, 21B, 21C) sont formés dans le boîtier (11),
trois des fiches (112a, 112b, 112c) d'une première borne hermétique (110) insérée dans un premier trou traversant (21A) sont respectivement connectées à la borne U, à la borne V et à la borne W,
trois des fiches (112a, 112b, 112c) d'une seconde borne hermétique (120) insérée dans un second trou traversant (21B) sont respectivement connectées à la borne U, à la borne V et à la borne W,
trois des bandes (113a, 113b, 113c) fixées à la première borne hermétique (110) sont respectivement connectées à une première barre omnibus (210), une deuxième barre omnibus (220) et une troisième barre omnibus (230) par l'intermédiaire de la pluralité de câbles de liaison (254, 255, 256), et
trois des bandes (113a, 113b, 113c) fixées à la deuxième borne hermétique (120) sont respectivement connectées à la première barre omnibus (210), à la deuxième barre omnibus (220) et à la troisième barre omnibus (230) par l'intermédiaire de la pluralité de câbles de liaison (254, 255, 256).

3. Compresseur électrique (1) selon la revendication 1,
dans lequel le moteur électrique (14) est un moteur triphasé à courant alternatif ayant une borne U, une borne V et une borne W,
trois des trous traversants (21A, 21B, 21C) sont formés dans le boîtier (11),
la pluralité de fiches (112a, 112b, 112c) d'une première borne hermétique (110) insérée dans un premier trou traversant (21A) sont connectées à la borne U,
la pluralité de fiches (112a, 112b, 112c) d'une deuxième borne hermétique (120) insérée dans un deuxième trou traversant (21B) sont connectées à la borne V,
la pluralité de fiches (112a, 112b, 112c) d'une troisième borne hermétique (130) insérée dans un troisième trou traversant (21C) sont connectées à la borne W,
la pluralité de bandes (113a, 113b, 113c) fixées à la première borne hermétique (110) sont connectées à une première barre omnibus (210) par l'intermédiaire de la pluralité de câbles de liaison (254, 255, 256),
la pluralité de bandes (113a, 113b, 113c) fixées à la deuxième borne hermétique (120) sont connectées à une deuxième barre omnibus (220) par l'intermédiaire de la pluralité de câbles de liaison (254, 255, 256), et
la pluralité de bandes (113a, 113b, 113c) fixées à la troisième borne hermétique (130) sont connectées à une troisième barre omnibus (230) par l'intermédiaire de la pluralité de câbles de liaison (254, 255, 256).

4. Compresseur électrique (1) selon l'une quelconque des revendications 1 à 3,
dans lequel la pluralité de fiches (112a, 112b, 112c) sont formées pour s'étendre le long d'une direction prédéterminée, et
à une position à laquelle une ligne droite connectant une première position de disposition où une première fiche (112a) est disposée et une seconde position de disposition où une deuxième fiche (112b) est disposée ne passe pas sur un plan orthogonal à la direction prédéterminée, l'autre - fiche (112c) est disposée.

5. Compresseur électrique (1) selon l'une quelconque des revendications 1 à 4,
dans lequel trois des câbles de liaison (251-259) ou plus sont respectivement connectés à la pluralité de barres omnibus (210, 220, 230), et
à une position à laquelle une ligne droite connectant une première position de connexion où un premier câble de liaison (251) est connecté à une barre omnibus (210) prédéterminée et une deuxième position de connexion où un deuxième câble de liaison (257) est connecté à la barre omnibus (210) prédéterminée ne passe pas, l'autre câble de liaison (254) est connecté.
